# EUROPEAN PATENT SPECIFICATION

(11) **EP 1 173 804 B1**
(45) Date of publication and mention of the grant of the patent: **14.06.2006**
(21) Application number: 00917574.6
(22) Date of filing: 16.03.2000
(51) Int. Cl.: G06F 1/00, H04L 12/00

(54) **ARRANGEMENT AND METHOD RELATING TO INTERCONNECTION**
ANORDNUNG UND VERFAHREN DIE SICH AUF VERBINDUNGEN BEZIEHEN
DISPOSITIF ET PROCEDE D'INTERCONNEXION

(30) Priority: 17.03.1999 SE 9900976
(43) Date of publication of application: 23.01.2002
(73) Proprietor: TELEFONAKTIEBOLAGET LM ERICSSON (publ), 164 83 Stockholm (SE)
(72) Inventor: BIRGERSON, Joakim, SE-246 36 Löddeköpinge (SE); HEDAKER, Bertil, S-245 32 Staffanstorp (SE); HENNINGSSON, Martin, S-215 53 Malmö (SE); ISRAELSSON, Claes, S-224 77 Lund (SE)
(74) Representative: Bergentall, Annika Maria
(86) International application number: PCT/SE2000/000507
(87) International publication number: WO 2000/055708

(56) References cited:
- EP-A1- 0 573 248
- US-A- 5 148 481
- US-A- 5 434 918
- US-A- 5 550 984
- US-A- 5 623 601
- US-A- 5 805 803
- HUNT R: "Internet/Intranet firewall security-policy, architecture and transaction services" COMPUTER COMMUNICATIONS, vol. 21, 1 September 1998 (1998-09-01), pages 1107-1123, XP004146571

## Description

### FIELD OF THE INVENTION

The present invention relates to an arrangement and a method for providing interconnection between a global communication system or a third party controlled data communication system) such as e.g. Internet and one or more subsystems (e.g. intranets and/or extranets or subsystems thereof).

### STATE OF THE ART

The society of today is strongly affected by a new paradigm often named "The Internet". Even if the Internet is only a part of the new paradigm, it describes computers using IP-technology (TCP/IP) communicating worldwide. When a large company brings the Internet inside its "territory" or its "firewalls" it is called an intranet (internal Internet). The technology is exactly the same, but the computers inside the firewalls are protected from Internet which is open which sometimes can be seen as dangerous for many reasons, e.g. the security aspect, secrecy etc.

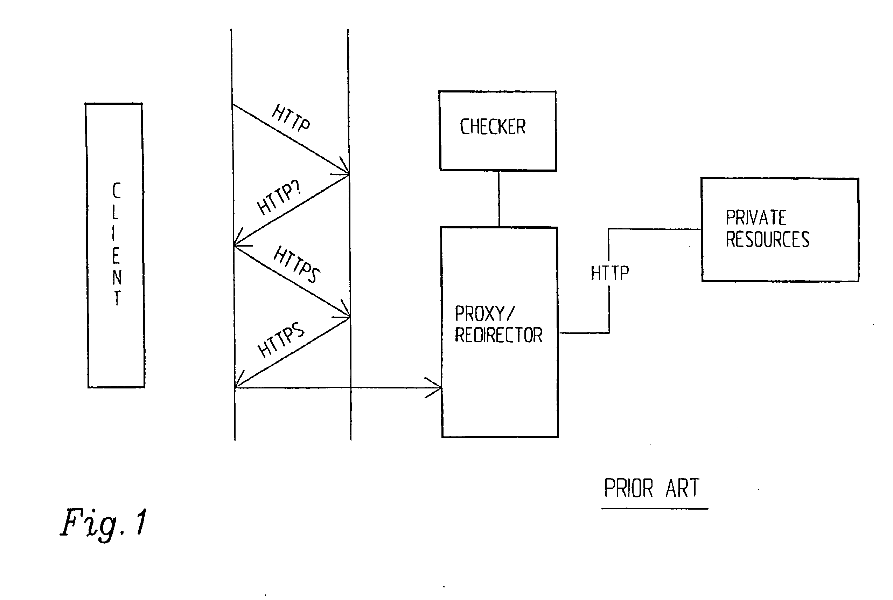

US-A-5 805 803 shows a secure web tunnel wherein a client computer e.g. connected to Internet makes a request for an intranet resource to a tunnel of a firewall isolating the intranet from Internet. The request is made in a public message which by the tunnel is sent to the client computer for redirection to a proxy server of the tunnel in a public message. A token is received in the proxy server from the client computer as well as the request for the resource in a secure message over e.g. Internet. If the token is valid, the proxy server forwards the request to the intranet. The session however stops in the proxy server which in principle means that the user after logging in is given access or denied access. For every subsequent request, the proxy server checks if access has been given; if yes, the request is passed on. No profiling or user customization is allowed and moreover no distributed administration is possible. The functioning of such a system is schematically illustrated in Fig. 1.

### SUMMARY OF THE INVENTION

The challenge today is to merge the "open and dangerous" Internet with "secret" intranets or in other words invite partners/users worldwide to take part of the e.g. company internal infrastructure and processes. This is called an extranet.

This has to be done in a structured and secure way. It has to be made sure that e.g. the company appears as one global company (for a big company there may be many portals), that extranet systems are built on a common platform and thus are compatible and that efforts are coordinated and made measurable. Last but not least, it has to take place in a secure way.

What is needed is therefore an interconnecting arrangement or an arrangement which forms a common platform, particularly from an IS/IT perspective (Information Systems/Information Technology) point of view. A method of providing for interconnecting internal and external systems is also needed such as a third party controlled datacommunication system and subsystems or intranets/extranets.

In the application is generally referred to subsystems. A subsystem is in the present application taken to mean an extranet or an intranet, but also subsystems to an extranet which in turn is a subsystem of a portal.

The Internet, intranet and extranet are mentioned above. They share the same technology, the same infrastructure. For that reason they can be grouped and called infranet. What is described in this application is valid for infranet. The interconnecting platform as claimed herein is as useful on the intranet as anywhere else. But since it was developed explicitly for extranet, the application is focused thereon. It is however not limited thereto.

An analogy can be used to describe the interconnecting arrangement of the present invention. When a partner (user) visits a company, he/she goes to the reception, introduces himself and informs the receptionist about who he has an appointment with. The receptionist calls that person to check/inform that there is a partner waiting. While the company employee goes to the reception to welcome and escort the partner, the receptionist prints a "Visitor Tag" for the partner to wear during the stay at the company. When the visit is over, the partner returns the tag and leaves the company.

It is possible to standardise the way a company electronically welcomes, registers and escorts partners inside it. Since the communication is protected by encryption, this is done with a high level of security and integrity towards the "open and dangerous" Internet.

An arrangement and a method are also needed which handle security in an appropriate manner. Still further an arrangement and a method are needed which provide for inter-communication while acting as a service shield. This can be compared to a "receptionist". Such is e.g. only expected to be arranged to provide for a good and appropriate service.

An arrangement and a method are also needed which enable a general and flexible web-solution. Particularly there should be no requirements on the user. Therefore an interconnecting arrangement for enabling a user of a third party controlled data communication system to access a number of subsystems is provided. It comprises interconnecting serving means bridging the third party controlled data communication system and the subsystems, such that the user of the third party controlled data communication network communicates with the interconnecting serving means. Said interconnecting serving means communicates with said subsystems and logon serving means are provided which handle logging in to a number of subsystems using objects and communicating with an interconnecting protected user directory server keeping user information. Using said information a user is given/denied generic access to a number of subsystems. For subsystems specific authentication, the objects used by the logon serving means are reused by the specific subsystems. Particularly the third party controlled data communication network is a global datacommunication network. Even more particularly the global data communication network is Internet. Preferably only one username and password are needed for providing access for a user to a number of subsystems. Advantageously a web browser is used to enable access to a number of subsystems via the interconnecting arrangement. The logon serving means preferably comprises a web server and in that it holds logon objects and administration objects using an encapsulating code. In a most advantageous implementation the logon serving means comprises a web server which holds and uses distributed computing objects. The logon objects and administration objects or distributed computing objects may DCOM-objects by Microsoft^{™}. Substantially any programming language can be wrapped with COM/DCOM providing a standardised interface. In another, preferred, embodiment Corba^{™} objects are used for distributed computing. The web server language is translated by said objects to the language of the user directory server. The only components/objects able to communicate with the user directory server are the objects of the logon server which for system specific authentication also are reused by the specific requested subsystem.

The user directory server preferably comprises an object oriented database designed for a large number of users and their attributes. In a particular implementation the user directory server is able to handle four dimensions, e.g. user, role, subsystems and organisational unit. The invention is however not limited thereto; it may as well be more or less dimensions, or other dimensions. The user directory server uses the LDAP protocol. In a particular implementation the interconnecting server is a reverse proxy server. The interconnecting server comprise means for establishing whether a request from a user relating to a subsystem is allowable or not.

If the interconnecting (e.g. reverse proxy server) finds an allowance indication, e.g. a cookie, the request is redirected to the requested subsystem, otherwise the user is redirected to the logon server for logon and in that the identity is examined in the user directory server to determine whether logon should be allowed.

The subsystem(s) that is/are accessed reuse(s) the same objects, e.g. distributed computing objects, as the logon server and said subsystem is responsible for access permission and access criteria. A customized user profile can be provided under responsibility of the subsystem.

Therefore also a method of connecting a user (system) of a third party controlled datacommunication system to a number of subsystems is provided. It comprises the steps of; providing a request relating to a number of subsystems to a serving means of an interconnecting arrangement; switching to encrypted communications in the serving means of the interconnecting arrangement; examining from the serving means if an allowance and identification indication is received; if yes, redirecting the request to the requested subsystems; if not, redirecting the user to the logon server of the interconnecting arrangement for logging on if allowable; examining the user identity and allowability in a user directory of the interconnecting arrangement; if the user is valid, redirecting the user request to the requested subsystem(s) - otherwise, rejecting the request, the requested subsystem reusing the objects used by the logon serving means to obtain additional information, e.g. a user profile, thus providing for system specific authentication.

Particularly the third party controlled network is Internet and the request is a HTTP/HTTPS request from a web browser of the user. The allowance and identification means may comprise a cookie. Preferably the user directory server comprises an object oriented database. In a preferred embodiment the method comprises the step of: communicating with the user-directory server using distributed computing objects. The distributed computing objects may be COM/DCOM^{™} objects. Alternatively the distributed computing objects are Corba^{™} objects.

### BRIEF DESCRIPTION OF THE DRAWINGS

The invention will in the following be further described in a nonlimiting way and with reference to the accompanying drawings in which:
- FIG 1: schematically illustrates a prior art system,
- FIG 2: is a schematical overview showing the interconnecting arrangement,
- FIG 3: is an illustration of the system according to the invention,
- FIG 4: is a schematical illustration of the system architecture of the interconnecting arrangement, and
- FIG 5: is a more detailed illustration of the system architecture.

### DETAILED DESCRIPTION OF THE INVENTION

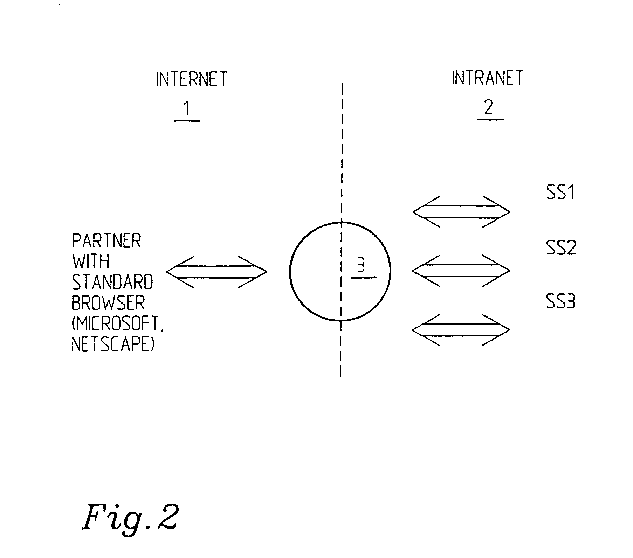

Referring to Fig. 2 the above mentioned analogy is used for descriptive purposes. In Fig. 2 the partner (user) visits the company via Internet 1 through a web browser. The interconnecting arrangement 3 GLUE (Generic Logon User Environment), the glue between the Internet and intranet (2) can be said to represent the reception and the various subsystems SS1-SS3 (e.g. extranets) behind GLUE 3 are the company employees. By leading a visiting partner through the GLUE 3 portal, an entrance is created that is easy to find and use. With one username and password the partner gets access to all extranet systems according to his personal profile - the interconnecting arrangement 3 (GLUE) handles the partners on an individual basis. In addition, the portal makes the company look like the one global company that it is or may be.

Through the interconnecting arrangement 3 of the present invention authentication is actually handled in two steps, namely a first, generic, step which can be seen as a global authentication, and a second, system or subsystem specific step.

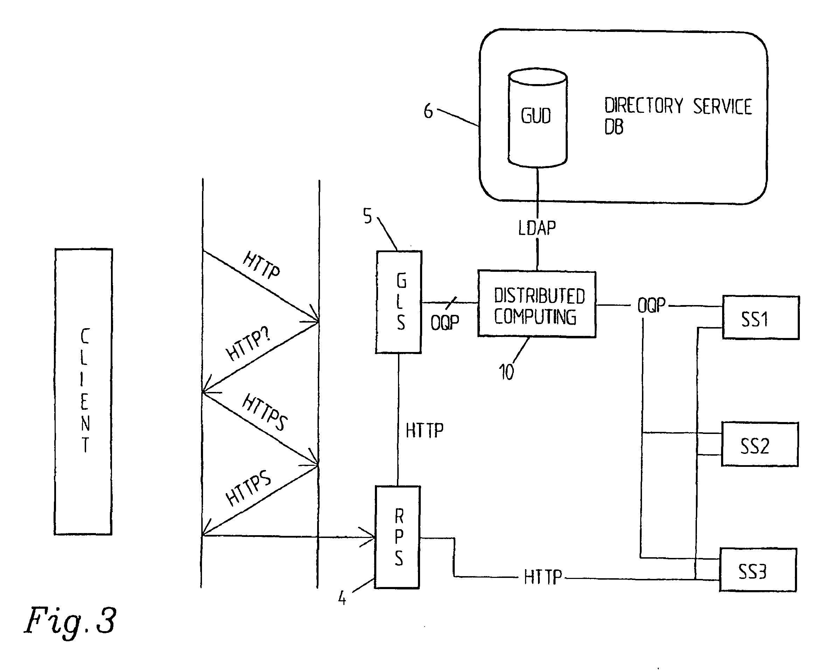

In the first step the interconnecting arrangement establishes that the user exists in the database, GUD 6. For that parpose the logon server 5 may use what here, and in the following, is denoted an OQP protocol (Object query protocol) which is taken to mean a collective term for implementation specific protocols as will be further discussed below, towards the authentication/session component (distributed computing means 10) c.f. Fig. 3.

If the user exists in database GUD 6, he is allowed to proceed entering into the initially requested system. Then the interconnecting arrangement (GLUE) transfers the responsibility for the user to the respective subsystem. The requested subsystem uses an OQP (in the same manner as GLS 5) to find a more profound profile relating to the user. From the user profile may e.g. information as to if the user has access to the specific subsystem, relevant category, organisational, geographical belonging etc.

Through the application programming interface of the interconnecting arrangement the subsystem is provided with ability to find the personal profile of the user. This makes it possible for the builder of the system to customize its behaviour depending on user. The session can be said to follow the user. The difference between known systems and the inventive system is clear when comparing Figs. 1 and 3.

The present invention implements distributed computing. This is a technique "componentization" that is based on creating components or objects freely moving in a domain. In that manner the components get available for all systems/applications which in turn copies, i.e. creates, instances, and uses the copy/instance for its own purpose.

GLUE can be said to contain two such components, one intended for authentication/session and one for administration. As a first task they should be "empowered" to operate towards GUD 6, i.e. be authorized (from an access point of view) to communicate with the DB GUD 6 on behalf of the subsystems/applications.

Secondly the components or building blocks contain interfaces/rules relating to how authentication/administration is to be handled. This is an Application Programmable Interface (API) and it is used by programmers developing e.g. a subsystem.

In Fig. 3 protocols are denoted HTTP, LDAP and OQP. HTTP is discussed below, LDAP is the protocol that the GLUE components use towards the DB GUD 6 on behalf of the subsystem/applications. QCP means Object Query Protocol, of above. For one specific implementation the protocol may be ILOP (Internet Interorb Protocol) using Corba^{™} as a basis for distributed computing. If DCOM is used, the protocol may be RPC (Remote Procedure Calls). However in principle any adacuate protocol may be used for the respective objects, also e.g. HTTP. The invention is by no means limited to the use of any specific protocols, but in general an OQP as discussed earlier is used.

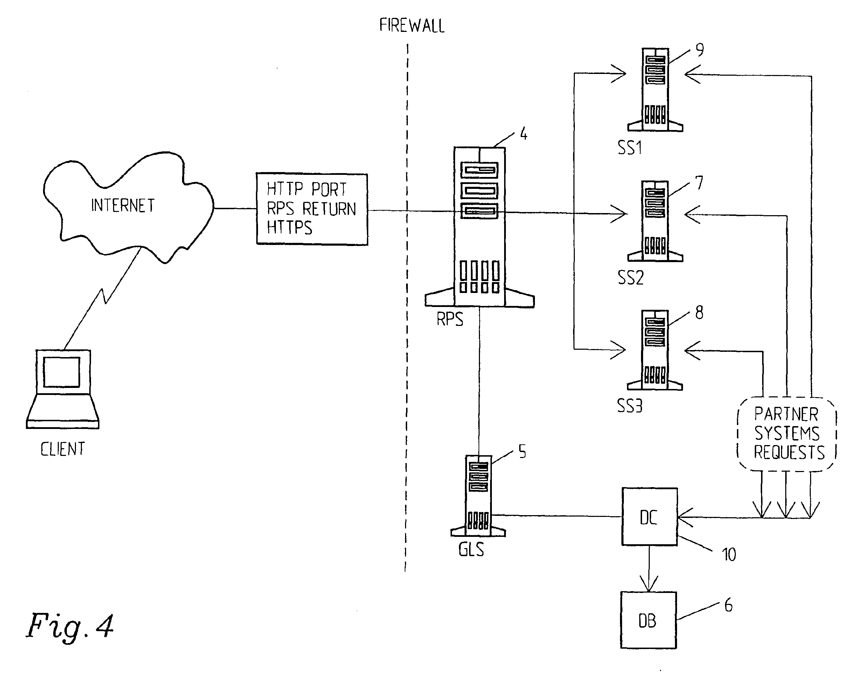

Fig. 4 shows more in detail the architecture of the interconnecting arrangement 3, or more particularly the generic logon user environment. Two main components are explicitly illustrated, namely the Reverse Proxy Server (RPS) 4 and the Generic (user environment) Logon Server (GLS) 5. A further component, which is of importance for the functioning, a generic logon user directory, DB (GUD), 5 is also shown. The three subsystems SS1, SS2, SS3 can be said to represent subsystem ports or extranet system "port". Their functioning will now be described more in detail.

Incoming to said systems are user (partner) system requests. The Reverse Proxy Server (RPS) 4 is the "front end" of the interconnecting arrangement or the generic logon user environment. This is the function that creates the actual bridge between the Internet and company proprietory subsystems or extranet systems. The partner (user) communicates with the RPS 4 and the RPS 4 communicates with the subsystems. At the same time as the RPS 4 is "invisible" in the web browser, the partner (user) never steps beyond it.

While "escorting" the partner to the requested subsystem, the RPS 4 looks for identification allowance means, particularly visitor tags. The partner/user requesting an extranet system needs to "wear" a tag. If the tag is missing (i.e. the partner has not logged on), the request is redirected to GLS 4.

The RPS 4 is busy acting as a "bridge". Thus, when a partner is requested to log on, this is handled by a separate function, the GLS 5. When referring to a partner, the meaning should be understood from the context and it does of course not have to be a "partner" in the conventional sense. If the RPS 4 is described as the front end, GLS 5 is its middle tier. In addition to being a web server, it may e.g. be the holder of two interconnecting arrangement 3 distributed computing objects of distributed computing means 10.

For distributed computing may e.g. Corba^{™} objects be used. Another alternative is COM/DCOM^{™} objects which is a Microsoft standard for encapsulating code. This means that practically any programming language can be wrapped with COM/DCOM and thereby get a standardised interface.

Of course may also other standards, interfaces and objects allowing distributed computing be used.

To use an analogy, it is referred to a phone conversation taking place between a Japanese and an American When the Japanese speaks Japanese it comes out as English in the other end and vice versa. Between them there are two distributed computing objects that are capable of wrapping Japanese and English respectively. Then the objects themselves can communicate over a "standardised language interface".

The GLS 5 uses these objects to communicate with the directory server, GUD 6, to be described below. As in the analogy above, the objects translate the language of the web servers to that of GUD 6 - here LDAP.

GUD 6 is "invisible". GUD 6 is the "back end" of the interconnecting arrangement 3 and the only components which can communicate with it are the distributed computing objects described above (in this particular implementation). The reason for this is that GUD 6 contains all users, their passwords and profiles. In other words, GUD 6 needs to be protected behind a very well defined shield of interface rules. No one talks to or communicates directly with GUD 6.

GUD 6 is an object oriented database designed for a large number of users (approximately 10 millions in a particular embodiment) and their attributes. GUD 6 can easily handle four dimensions - user, role, extranet system and organisation unit. This is, if not impossible, very hard to do in a "traditional" relational database. GUD 6 here uses LDAP (Lightweight Directory Access Protocol), which is a standardised Internet protocol. This protocol is derived from the X.500 standard and designed to do quick and efficient user look-ups in a directory server. Also other protocols can be used.

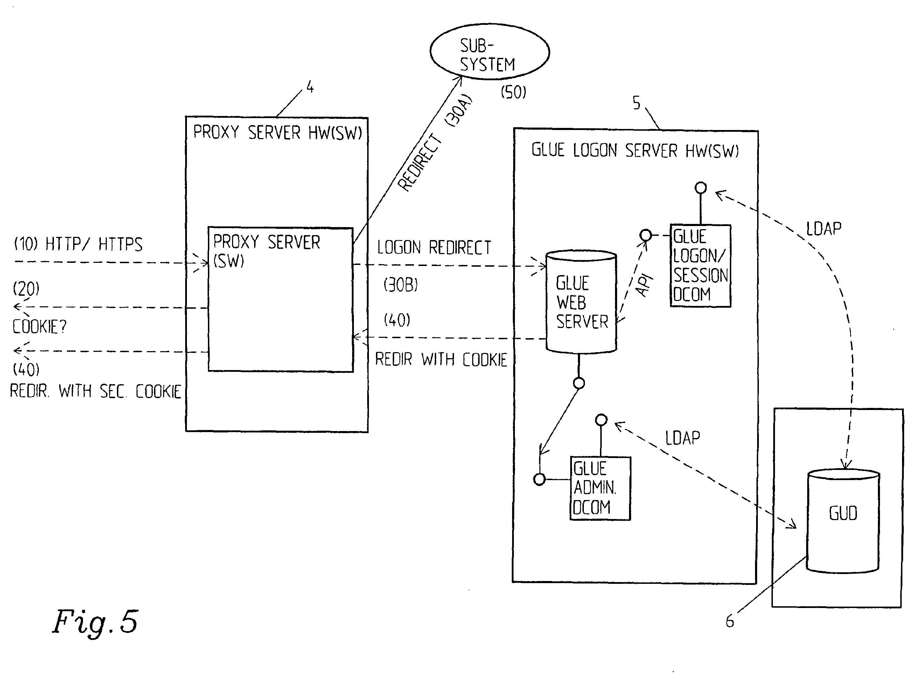

In Fig. 5 the system architecture of the interconnecting arrangement 3, which also is referred to as GLUE (Generic Logon User Environment) for reasons of simplicity, is illustrated. The main system components, the reverse proxy server 4, the logon server 5 and the directory 6 and their interworking relationship will be described through illustration of an example in which a request comes in from a web browser of a "partner" or user.

In a first step (10) is thus supposed that a HTTP/HTTPS request comes from the web browser of the partner. HTTP (Hyper Text Transfer Protocol) is the protocol used on the Internet to transport web pages. If the request is HTTP, RPS 4 automatically switches the communication to HTTPS (S in HTTPS stands for Secure, which means that the communication is encrypted). The interconnecting arrangement GLUE 3 only allows HTTPS communication, or more generally encrypted communication. In a subsequent step (20) the RPS 4 looks for the "Visitor Tag" or in a more technical language, a cookie, in this particular embodiment. If the cookie is in place, the RPS 4 "escorts" or redirects (30a) the request to the requested subsystem. If however the cookie (tag) is missing, the partner is redirected (30b) to GLS 5 and is asked to register (logon). The identity is checked in GUD 6 particularly through the distributed computing objects. Next is examined if the partner is valid or allowable. Then he gets his cookie/tag and is redirected (40) to the subsystem he initially requested. If he is not valid, he will not receive a tag and will never be redirected to any subsystem. Finally the partner may end up in one of the company subsystems, where the company (or similar) wants him to be (50).

In one implementation COM/DCOM objects are used. More generally distributed computing is implemented using Corba-objects or COM/DCOM as referred to above. DCOM stands for Distributed COM. This means in the GLUE example with web servers that a subsystem can make instances of the GLUE DCOM objects from the GLS which can be elsewhere, on another server, or component or domain and run it as if it were locally located on the subsystem. This is actually what happens when the partner gets to the subsystem. At this point the partner only wears a "clearance" tag, the subsystem does not know anything about the partner himself. So instead of GLUE 3 broadcasting the entrance of the partner(s) to all the subsystems (creating a lot of network traffic), the subsystem uses the same components or distributed computing objects, e.g. Corba- or COM/DCOM objects as GLS 5 (i.e. as used for global logging on) and asks additional questions about the user which are relevant to that subsystem. In other words, the subsystem is responsible for whom and on what condition anyone is allowed and it determines a personal user profile. The clearance part handled by GLUE 3, is only a check that the partner is registered in GUD 6 and does not include any personal profile checking.

The interconnecting arrangement 3 advantageously supports distributed administration. This means that from the top and down, a number of administration levels are defined (per subsystem). The subsystem uses the administration distributed computing object to allow its various levels of administrators to administer that subsystem's branch or node of the subsystem in the interconnecting arrangement 3. The distributed administration concept allows external node administrators and end users (individuals) to "own" their accounts. They can change information about themselves (within given limits) including their password.

The invention is not limited to the illustrated embodiments, used protocols, standards etc. It is furthermore not limited to "companies", "partners" etc. but this should be interpreted in a wider sense, meaning any group having a subsystem, intranet, extranet, other groups or individuals wanting some kind of access etc. Furthermore it is not limited to Internet but more generally to a global data communication system or a third party controlled data communication system.

## Claims

1. An interconnecting arrangement for enabling a user of a third party controlled data communication system to access a number of subsystems, each of said subsystems being an extranet or an intranet or a subsystem thereof,
**characterized in**
**that** the third party controlled data communication system is a global data communication network, that it comprises interconnecting serving means (RPS;4) bridging the third party controlled data communication system and the subsystems, such that the user of the third party controlled data communication system communicates with the interconnecting serving means (RPS;4) and never steps beyond it and in that said interconnecting serving means (RPS;4) comprising a reverse proxy server and communicates with said subsystems and with logon serving means (GLS;5) being a separate function and comprising a web server holding distributed computing objects and handling logging in to a number of subsystems using said distributed computing objects and communicating with an interconnecting protected user directory server (GUD;6) keeping user information and in that using said user information a user is given/denied generic access to a number of subsystems and in that for subsystems specific authentication, the subsystem that is accessed reuse(s) the same distributed computing objects as the logon serving means (5) and in that said subsystem is responsible for access permission and access criteria and in that a customized user profile is provided.

2. An arrangement according to claim 1,
**characterized in**
**that** the global data communication network is Internet.

3. An arrangement according to any one of the preceding claims,
**characterized in**
**that** only one username and password are needed for providing access for a user to a number of subsystems.

4. An arrangement at least according to claim 2,
**characterized in**
**that** a web browser is used to enable access to a number of subsystems via the interconnecting arrangement.

5. An arrangement according to any one of the preceding claims,
**characterized in**
**that** the logon serving means (GLS;5) comprises a web server and in that it holds logon objects and administration objects using an encapsulating code.

6. An arrangement according to claim 5,
**characterized in**
**that** the logon objects and administration objects or distributed computing objects are DCOM-objects by Microsoft^{™} and in that substantially any programming language can be wrapped with COM/DCOM thus getting a standardised interface.

7. An arrangement according to claim 1,
**characterized in**
**that** Corba^{™} objects are used for distributed computing.

8. An arrangement according to any one of claims 5-7,
**characterized in**
**that** the web server language is translated by said objects to the language of the user directory server (GUD;6).

9. An arrangement according to claim 8,
**characterized in**
**that** the only components/objects able to communicate with the user directory server (6) are the objects of the logon server (5) which for system specific authentication also are reused by the specific requested subsystem.

10. An arrangement according to any one of the preceding claims,
**characterized in**
**that** the user directory server (6) comprises an object oriented database designed for a large number of users and their attributes.

11. An arrangement according to claim 10,
**characterized in**
**that** the user directory server (6) is able to handle four dimensions, e.g. user, role, subsystems and organisational unit.

12. An arrangement according to any one of claims 8-11,
**characterized in**
**that** the user directory server (6) uses the LDAP protocol.

13. An arrangement according to any one of the preceding claims,
**characterized in**
**that** the interconnecting server (4) comprises means for establishing whether a request from a user relating to a subsystem is allowable or not.

14. An arrangement according to claim 13,
**characterized in**
**that** if the interconnecting server (4) finds an allowance indication, e.g. a cookie, the request is redirected to the requested subsystem, otherwise the user is redirected to the logon server for logon and in that the identity is examined in the user directory server to determine whether logon should be allowed.

15. A method of connecting a user of a third party controlled data communication system (1) to a number of subsystems (2), each of which being an extranet and/or an intranet or a subsystem thereof,
**characterized in**
**that** the third party controlled data communication network is a global data communication network, and that the method comprises the steps of:
- providing a request relating to a number of subsystems (2) to an interconnecting serving means (RPS;4) comprising a reverse proxy server, beyond which the user never steps, of an interconnecting arrangement (3);
- switching to encrypted communications in the serving means (4) of the interconnecting arrangement (3);
- examining from the interconnecting serving means (4) if an allowance and identification indication is received;
- if yes, redirecting the request to the requested subsystems (2) ;
- if not, redirecting the user to a logon server (5) being a separate function of the interconnecting arrangement (3) for logging on if allowable and communicating with the user-directory server (6) using distributed computing objects;
- examining the user identity and allowability in a user directory (6) of the interconnecting arrangement (3);
- if the user is valid, redirecting the user request to the requested subsystem(s) - otherwise, rejecting the request,
- the requested subsystem reusing the distributed computing objects used by the logon serving means (5) to obtain additional information, e.g. a user profile, thus providing for system specific authentication.

16. A method according to claim 15,
**characterized in**
**that** the third party controlled network is Internet and that the request is a HTTP/HTTPS request from a web browser of the user.

17. A method according to claim 15 or 16,
**characterized in**
**that** the allowance and identification means comprises a cookie.

18. A method according to any one of the claims 15-17,
**characterized in**
**that** user directory server (6) comprises an object oriented database.

19. A method according to claim 15,
**characterized in**
**that** the distributed computing objects are COM/DCOM^{™} objects.

20. A method according to claim 15,
**characterized in**
**that** the distributed computing objects are Corba^{™} objects.

## Patentansprüche

1. Verbindungsanordnung, die einem Benutzer eines von einer dritten Partei gesteuerten Datenkommunikationssystems ermöglicht, auf eine Reihe von Subsystemen zuzugreifen, wobei jedes der Subsysteme ein Extranet oder ein Intranet oder ein Subsystem davon ist,
**dadurch gekennzeichnet, dass**
das von einer dritten Partei gesteuerte Datenkommunikationssystem ein globales Datenkommunikationsnetzwerk ist, dass es ein Verbindungsdienstvermittlungsmittel (RPS; 4) umfasst, das Brücken zwischen dem von einer dritten Partei gesteuerten Datenkommunikationssystem und den Subsystemen bildet, so dass der Benutzer des von einer dritten Partei gesteuerten Datenkommunikationssystems mit dem Verbindungsdienstvermittlungsmittel (RPS; 4) kommuniziert und niemals über dieses hinausgeht, und dass das Verbindungsdienstvermittlungsmittel (RPS; 4), das einen Reverse-Proxy-Server umfasst, mit den Subsystemen und mit einem Anmeldungsdienstvermittlungsmittel (GLS; 5) kommuniziert, das eine separate Funktion ist und einen Web-Server umfasst, der verteilte Rechenobjekte hält und die Anmeldung bei einer Reihe von Subsystemen bearbeitet, die die verteilten Rechenobjekte verwenden und mit einem verbindungsgeschützten Benutzerverzeichnisserver (GUD; 6) kommunizieren, der Benutzerinformationen hält, und dass unter Verwendung der Benutzerinformationen einem Benutzer ein wählbarer Zugang auf eine Reihe von Subsystemen gewährt/verwehrt wird, und dass für eine spezifische Authentikation der Subsysteme das Subsystem, auf das zugegriffen wird, wieder dieselben verteilten Rechenobjekte wie das Anmeldungsdienstvermittlungsmittel (5) verwendet, und dass das Subsystem für eine Zugriffserlaubnis und für Zugriffskriterien verantwortlich ist, und dass ein personalisiertes Benutzerprofil bereitgestellt ist.

2. Anordnung nach Anspruch 1,
**dadurch gekennzeichnet, dass**
das globale Datenkommunikationsnetzwerk Internet ist.

3. Anordnung nach einem der vorangehenden Ansprüche,
**dadurch gekennzeichnet, dass**
nur ein Benutzername und ein Passwort notwendig sind, um einem Benutzer Zugriff auf eine Reihe von Subsystemen zu bieten.

4. Anordnung zumindest nach Anspruch 2,
**dadurch gekennzeichnet, dass**
ein Web-Browser verwendet wird, um Zugriff auf eine Reihe von Subsystemen über die Verbindungsanordnung zu ermöglichen.

5. Anordnung nach einem der vorangehenden Ansprüche,
**dadurch gekennzeichnet, dass**
das Anmeldungsdienstvermittlungsmittel (GLS; 5) einen Web-Server umfasst und dass es Anmeldungsobjekte und Administrationsobjekte hält, die einen Verkapselungskode verwenden.

6. Anordnung nach Anspruch 5,
**dadurch gekennzeichnet, dass**
die Anmeldungsobjekte und Administrationsobjekte oder verteilten Rechenobjekte DCOM-Objekte von Microsoft^{™} sind, und dass im Wesentlichen jede Programmierungssprache COM/DCOM verpackt werden kann, wodurch eine standardisierte Schnittstelle erhalten wird.

7. Anordnung nach Anspruch 1,
**dadurch gekennzeichnet, dass**
Corba^{™}-Objekte für verteiltes Rechnen verwendet werden.

8. Anordnung nach einem der Ansprüche 5 bis 7,
**dadurch gekennzeichnet, dass**
die Web-Server-Sprache von den Objekten in die Sprache des Benutzerverzeichnisservers (GUD; 6) übersetzt wird.

9. Anordnung nach Anspruch 8,
**dadurch gekennzeichnet, dass**
die einzigen Komponenten/Objekte, die zur Kommunikation mit dem Benutzerverzeichnisserver (6) imstande sind, die Objekte des Anmeldungsservers (5) sind, die zur systemspezifischen Authentikation auch von dem spezifischen angeforderten Subsystem wieder verwendet werden.

10. Anordnung nach einem der vorangehenden Ansprüche,
**dadurch gekennzeichnet, dass**
der Benutzerverzeichnisserver (6) eine objektorientierte Datenbank umfasst, die für eine große Anzahl von Benutzern und deren Attribute angelegt ist.

11. Anordnung nach Anspruch 10,
**dadurch gekennzeichnet, dass**
der Benutzerverzeichnisserver (6) vier Dimensionen bearbeiten kann, z.B. Benutzer, Funktion, Subsysteme und Organisationseinheit.

12. Anordnung nach einem der Ansprüche 8 bis 11,
**dadurch gekennzeichnet, dass**
der Benutzerverzeichnisserver (6) das LDAP-Protokoll verwendet.

13. Anordnung nach einem der vorangehenden Ansprüche,
**dadurch gekennzeichnet, dass**
der Verbindungsserver (4) ein Mittel zur Feststellung umfasst, ob eine Anfrage von einem Benutzer, die sich auf ein Subsystem bezieht, zulässig ist oder nicht.

14. Anordnung nach Anspruch 13,
**dadurch gekennzeichnet, dass**
wenn der Verbindungsserver (4) einen Zulässigkeitshinweis, z.B. ein Cookie, findet, die Anfrage zu dem angeforderten Subsystem umgeleitet wird, und andernfalls der Benutzer zu dem Anmeldungsserver zur Anmeldung umgeleitet wird, und dass die Identität im Benutzerverzeichnisserver überprüft wird um festzustellen, ob eine Anmeldung ermöglicht werden sollte.

15. Verfahren zum Verbinden eines Benutzers eines von einer dritten Partei gesteuerten Datenkommunikationssystems (1) mit einer Reihe von Subsystemen (2), von welchen jedes ein Extranet und/oder Intranet oder ein Subsystem davon ist,
**dadurch gekennzeichnet, dass**
das von einer dritten Partei gesteuerte Datenkommunikationssystem ein globales Datenkommunikationsnetzwerk ist, und dass das Verfahren folgende Schritte umfasst:
- Bereitstellen einer Anfrage, die sich auf eine Reihe von Subsystemen (2) bezieht, an ein Verbindungsdienstvermittlungsmittel (RPS; 4), das einen Reverse-Proxy-Server umfasst, über den der Benutzer niemals hinausgeht, einer Verbindungsanordnung (3);
- Umschalten in verschlüsselte Kommunikationen in dem Dienstvermittlungsmittel (4) der Verbindungsanordnung (3) ;
- Überprüfen im Verbindungsdienstvermittlungsmittel (4), ob eine Zulässigkeits- und Identifizierungsanzeige empfangen wird;
- wenn ja, Umleiten der Anfrage zu den angeforderten Subsystemen (2);
- wenn nein, Umleiten des Benutzers zu einem Anmeldungsserver (5), der eine separate Funktion der Verbindungsanordnung (3) darstellt, zum Anmelden, falls zulässig, und Kommunizieren mit dem Benutzerverzeichnisserver (6), der verteilte Rechenobjekte verwendet;
- Überprüfen der Benutzeridentität und Zulässigkeit in einem Benutzerverzeichnis (6) der Verbindungsanordnung (3);
- wenn der Benutzer gültig ist, Umleiten der Benutzeranfrage zu dem oder den angeforderten Subsystemen - andernfalls Zurückweisen der Anfrage,
- wobei das angeforderte Subsystem die verteilten Rechenobjekte, die von dem Anmeldungsdienstvermittlungsmittel (5) verwendet werden, wieder verwendet, um zusätzliche Informationen, z.B. ein Benutzerprofil, zu erhalten, wodurch die systemspezifische Authentikation bereitgestellt wird.

16. Verfahren nach Anspruch 15,
**dadurch gekennzeichnet, dass**
das von einer dritten Partei gesteuerte Netzwerk Internet ist und dass die Anfrage eine HTTP/HTTPS-Anfrage von einem Web-Browser des Benutzers ist.

17. Verfahren nach Anspruch 15 oder 16,
**dadurch gekennzeichnet, dass**
das Zulässigkeits- und Identifizierungsmittel ein Cookie umfasst.

18. Verfahren nach einem der Ansprüche 15 bis 17,
**dadurch gekennzeichnet, dass**
der Benutzerverzeichnisserver (6) eine objektorientierte Datenbank umfasst.

19. Verfahren nach Anspruch 15,
**dadurch gekennzeichnet, dass**
die verteilten Rechenobjekte COM/DCOM^{™}-Objekte sind.

20. Verfahren nach Anspruch 15,
**dadurch gekennzeichnet, dass**
die verteilten Rechenobjekte Corba^{™}-Objekte sind.

## Revendications

1. Agencement d'interconnexion pour permettre à un utilisateur d'un système de communication de données commandé par une tierce partie d'accéder à un certain nombre de sous-systèmes, chacun desdits sous-systèmes étant un Extranet ou un Intranet ou un sous-système de ceux-ci ; **caractérisé en ce que** le système de communication de données commandé par une tierce partie est un réseau de communication de données global qui se compose d'un moyen de service d'interconnexion (RPS;4) raccordant le système de communication de données commandé par une tierce partie et les sous-systèmes, de sorte que l'utilisateur du système de communication de données commandé par une tierce partie communique avec le moyen de service d'interconnexion (RPS;4) et ne va jamais au-delà de celui-ci, et **en ce que** ledit moyen de service d'interconnexion (RPS;4) comprend un serveur proxy inverse et communique avec lesdits sous-systèmes et avec un moyen de service d'ouverture de session (GLS;5) étant une fonction séparée et comprend un serveur Internet maintenant des objets informatiques répartis et traitant l'entrée en communication sur un certain nombre de sous-systèmes en utilisant lesdits objets informatiques répartis et en communiquant avec un serveur d'annuaire d'utilisateurs protégé contre l'interconnexion (GUD;6) gardant des informations d'utilisateurs, et **en ce que**, en utilisant lesdites informations d'utilisateurs, il est donné ou refusé à un utilisateur un accès générique à un certain nombre de sous-systèmes, et **en ce que**, pour une authentification spécifique des sous-systèmes, le sous-système auquel il est accédé réutilise les mêmes objets informatiques répartis que le moyen de service d'ouverture de session (5), et **en ce que** ledit sous-système est responsable de la permission d'accès et des critères d'accès, et **en ce qu'**il est prévu un profil d'utilisateur personnalisé.

2. Agencement selon la revendication 1, **caractérisé en ce que** le réseau de communication de données global est l'Internet.

3. Agencement selon l'une quelconque des revendications précédentes, **caractérisé en ce que** seuls un nom d'utilisateur et un mot de passe sont nécessaires pour fournir à un utilisateur l'accès à un certain nombre de sous-systèmes.

4. Agencement au moins selon la revendication 2, **caractérisé en ce qu'**un navigateur Internet est utilisé pour permettre l'accès à un certain nombre de sous-systèmes via l'agencement d'interconnexion.

5. Agencement selon l'une quelconque des revendications précédentes, **caractérisé en ce que** le moyen de service d'ouverture de session (GLS;5) comprend un navigateur Internet et **en ce qu'**il maintient des objets d'ouverture de session et des objets d'administration en utilisant un code d'encapsulation.

6. Agencement selon la revendication 5, **caractérisé en ce que** les objets d'ouverture de session et les objets d'administration ou les objets informatiques répartis sont des objets DCOM de Microsoft^{™} et **en ce que** fondamentalement tout langage de programmation peut être enveloppé avec COM/DCOM, obtenant ainsi une interface normalisée.

7. Agencement selon la revendication 1, **caractérisé en ce que** des objets Corba^{™} sont utilisés pour l'informatique répartie.

8. Agencement selon l'une quelconque des revendications 5 à 7, **caractérisé en ce que** le langage de serveur Internet est traduit par lesdits objets en langage du serveur d'annuaire d'utilisateurs (GUD;6).

9. Agencement selon la revendication 8, **caractérisé en ce que** les seuls composants/objets en mesure de communiquer avec le serveur d'annuaire d'utilisateurs (6) sont les objets du service d'ouverture de session (5), qui sont également réutilisés par le sous-système demandé spécifique pour l'authentification spécifique du système.

10. Agencement selon l'une quelconque des revendications précédentes, **caractérisé en ce que** le serveur d'annuaire d'utilisateurs (6) comprend une base de données orientée objet conçue pour un grand nombre d'utilisateurs et leurs attributs.

11. Agencement selon la revendication 10, **caractérisé en ce que** le serveur d'annuaire d'utilisateurs (6) est en mesure de traiter quatre dimensions, par exemple : utilisateur, rôle, sous-systèmes et unité organisationnelle.

12. Agencement selon l'une quelconque des revendications 8 à 11, **caractérisé en ce que** le serveur d'annuaire d'utilisateurs (6) utilise le protocole LDAP.

13. Agencement selon l'une quelconque des revendications précédentes, **caractérisé en ce que** le serveur d'interconnexion (4) comprend un moyen pour établir si une demande provenant d'un utilisateur relative à un sous-système est permise ou non.

14. Agencement selon la revendication 13, **caractérisé en ce que**, si le serveur d'interconnexion (4) trouve une indication de permission, par exemple un témoin ("cookie"), la demande est réacheminée au sous-système demandé, sinon l'utilisateur est réacheminé au serveur d'ouverture de session pour l'ouverture de session et **en ce que** l'identité est examinée dans le serveur d'annuaire d'utilisateurs pour déterminer si l'ouverture de session devrait être permise.

15. Procédé pour connecter un utilisateur d'un système de communication de données commandé par une tierce partie (1) à un certain nombre de sous-systèmes (2), dont chacun est un Extranet et/ou un Intranet ou un sous-système de ceux-ci ; **caractérisé en ce que** le réseau de communication de données commandé par une tierce partie est un réseau de communication de données global et **en ce que** le procédé comprend les étapes qui consistent à :
- fournir une demande relative à un certain nombre de sous-systèmes (2) à un moyen de service d'interconnexion (RPS;4) comprenant un serveur proxy inverse, au-delà duquel l'utilisateur ne va jamais, d'un agencement d'interconnexion (3) ;
- commuter sur des communications chiffrées dans le moyen de service (4) de l'agencement d'interconnexion (3) ;
- examiner à partir du moyen de service d'interconnexion (4) si une indication de permission et d'identification est reçue ;
- si c'est le cas, réacheminer la demande aux sous-systèmes demandés (2) ;
- si ce n'est pas le cas, réacheminer l'utilisateur sur un serveur d'ouverture de session (5) étant une fonction séparée de l'agencement d'interconnexion (3) pour ouvrir la session si cela est permis et pour communiquer avec le serveur d'annuaire d'utilisateurs (6) en utilisant des objets informatiques répartis ;
- examiner l'identité de l'utilisateur et la permissibilité dans un annuaire d'utilisateurs (6) de l'agencement d'interconnexion (3) ;
- si l'utilisateur est valable, réacheminer la demande de l'utilisateur sur le(s) sous-système(s) demandé(s), sinon refuser la demande,
- le sous-système demandé réutilisant les objets informatiques répartis utilisés par le moyen de service d'ouverture de session (5) pour obtenir des informations additionnelles, par exemple un profil d'utilisateur, fournissant ainsi une authentification spécifique du système.

16. Procédé selon la revendication 15, **caractérisé en ce que** le réseau commandé par une tierce partie est l'Internet et **en ce que** la demande est une demande HTTP/HTTPS provenant d'un navigateur Internet de l'utilisateur.

17. Procédé selon la revendication 15 ou 16, **caractérisé en ce que** le moyen de permission et d'identification comprend un témoin ("cookie").

18. Procédé selon l'une quelconque des revendications 15 à 17, **caractérisé en ce que** le serveur d'annuaire d'utilisateurs (6) comprend une base de données orientée objet.

19. Procédé selon la revendication 15, **caractérisé en ce que** les objets informatiques répartis sont des objets COM/DCOM^{™}.

20. Procédé selon la revendication 15, **caractérisé en ce que** les objets informatiques répartis sont des objets Corba^{™}.
